(19) Europäisches Patentamt
European Patent Office
Office européen des brevets

(11) **EP 4 261 302 A1**

(12) **EUROPEAN PATENT APPLICATION**
published in accordance with Art. 153(4) EPC

(43) Date of publication:
**18.10.2023 Bulletin 2023/42**

(21) Application number: **21903458.4**

(22) Date of filing: **09.12.2021**

(51) International Patent Classification (IPC):
**C22C 33/02** (2006.01)   **C22C 38/00** (2006.01)
**C22C 38/46** (2006.01)   **B33Y 80/00** (2015.01)
**B33Y 70/00** (2020.01)   **B22F 1/00** (2022.01)
**B22F 10/38** (2021.01)   **B22F 10/64** (2021.01)

(52) Cooperative Patent Classification (CPC):
**B22F 1/00; B22F 10/38; B22F 10/64; B33Y 70/00;
B33Y 80/00; C22C 33/02; C22C 38/00;
C22C 38/46;** Y02P 10/25

(86) International application number:
**PCT/JP2021/045248**

(87) International publication number:
**WO 2022/124359 (16.06.2022 Gazette 2022/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.12.2020 JP 2020205378**

(71) Applicant: Sanyo Special Steel Co., Ltd.
**Himeji-shi, Hyogo 672-8677 (JP)**

(72) Inventors:
• **HAGIYA, Toru**
  **Himeji-shi, Hyogo 672-8677 (JP)**
• **KUSE, Tetsuzi**
  **Himeji-shi, Hyogo 672-8677 (JP)**
• **IKEDA, Hiroki**
  **Himeji-shi, Hyogo 672-8677 (JP)**
• **MUTOU, Yasumasa**
  **Himeji-shi, Hyogo 672-8677 (JP)**

(74) Representative: **Müller-Boré & Partner
Patentanwälte PartG mbB
Friedenheimer Brücke 21
80639 München (DE)**

(54) **SHAPED BODY FORMED OF POWDER**

(57)    An object of the present invention is to provide a shaped article which can satisfy both high heat conducting properties and hardness (quenching and tempering hardness, and hardness after retention at a high temperature and softening), and the present invention provides a shaped article produced from an Fe-based alloy powder, the Fe-based alloy powder consisting of, in mass%: $0.20 < C < 0.60$; $Si < 0.60$; $Mn < 0.90$; $Cr < 4.00$; $Ni < 2.00$; $Mo < 1.20$; $W < 2.00$; $V < 0.60$; $Al < 0.10$; and the balance consisting of Fe and unavoidable impurities, wherein the shaped article satisfies the following formulae (1) to (3):

$$T1 > 32.0 \quad (1)$$

$$T2 > 50.0 \quad (2)$$

$$PC < 3.0 \quad (3).$$

EP 4 261 302 A1

**Description**

FIELD OF THE INVENTION

The present invention relates to a shaped article produced from an Fe-based alloy powder. Specifically, the present invention relates to a shaped article produced by a shaping method including subjecting an Fe-based alloy powder to a rapid melting process and a rapid cooling process for solidification, such as a three-dimensional additive manufacturing method, a thermal spraying method, a laser coating method, a cladding method, or a hot isostatic pressing method.

BACKGROUND ART

In recent years, an additive manufacturing method has been applied in production of shaped articles composed of metals. Typified systems for a metal additive manufacturing method include a powder bed system (powder bed fusion system) and a metal deposition system (direct energy deposition system).

In a powder bed system, a portion irradiated with a laser beam or an electron beam, of a powder which has been spread, is molten and solidified. Such melting and solidification lead to bonding of particles in the powder. Such irradiation is applied selectively to a portion of a metal powder. Portions not irradiated are not molten. A bonding layer is formed only at the portion irradiated.

On the bonding layer thus formed, a further metal powder is newly spread, and the newly spread metal powder is irradiated with a laser beam or an electron beam. The irradiation results in melting and solidification of metal particles in the metal powder, and a new bonding layer is formed. The new bonding layer is also bonded with the existing bonding layer.

Such melting and solidification due to irradiation are sequentially repeated to result in gradual growth of an assembly of bonding layers. This growth provides a shaped article having a three-dimensional shape. Such an additive manufacturing method is used to thereby easily obtain a shaped article having a complicated shape.

There is disclosed, as an additive manufacturing method of a powder bed system, a procedure in which a shaped article having a three-dimensional shape is produced by using a mixed powder of an iron-based powder with a powder of one or more selected from the group consisting of nickel, a nickel-based alloy, copper, a copper-based alloy and graphite, as a metal powder for metal stereolithography, and repeating a powder layer formation step of bedding such a metal powder, a sintered layer formation step of irradiating the powder layer with a beam to form a sintered layer and a removal step of cutting a surface of a shaped article, to thereby form a sintered layer (see Patent Document 1).

A metal additive manufacturing method attracts attention also as a technique for shaping a mold, and use of steel grades including maraging steel and SKD61 as specific powder materials is tried. However, such steel grades have a low heat conductivity of about 20 W/m/K. Thus, when the method is applied to molds for hot stamping, cooling efficiencies of such molds by themselves decrease. Accordingly, it takes time to cool molds in use as molds, leading to a decrease in cycle speed for continuous production.

For a mold formed by a conventional forging method such as cogging, steel for a mold is proposed which has a high degree of hardness and high heat conduction and which can be applied to die-casting and hot stamping (see Patent Document 2). However, the steel for a mold, proposed, is not a material expected to be produced by a metal additive manufacturing method, but a material expected to be produced by a conventional forging method. The steel for a mold, proposed, is for a mold by a conventional production method such as a forging method, and thus has the problem of easily causing coarse carbides serving as the point of origin for fatigue failure, and can be hardly said to be sufficient for use in a metal additive manufacturing method.

As steel for a mold, which can be applied to a metal additive manufacturing method, a powder is proposed which has a composition in which $0.15 < C < 0.34$, $0.0 < Si < 0.52$, $4.00 < Cr < 5.72$, $-0.05814 \times [Cr] + 0.4326 < Mn < -0.2907 \times [Cr] + 2.4628$, $0.72 < Mo < 1.60$ and $0.20 < V < 0.61$ are satisfied and the balance is composed of Fe and unavoidable impurities (see Patent Document 3). However, the steel for a mold, proposed, has a heat conductivity of at most 25.2 to 34.7 W/m/K, and there is not provided any steel for a mold, which has high heat conducting properties, more than 35.0 W/m/K required in the market, and also has strength and which is suitable for additive manufacturing. Thus, the resulting shaped articles does not have sufficient characteristics.

CITATION LIST

PATENT DOCUMENTS

Patent Document 1: JP 2008-81840 A
Patent Document 2: JP 2018-119177 A
Patent Document 3: JP 2015-224363 A

SUMMARY OF THE INVENTION

Conventionally, steel grades including maraging steel and SKD61, applied to an additive manufacturing method, have been low in heat conductivity, and thus such steel grades, when applied to molds requiring cooling mechanisms such as die-casting and hot stamping, have taken time until cooling of the molds and thus have caused decrease in production cycle speed. There is then a need for a shaped article using steel for a mold, the steel having a high heat conductivity and increasing cooling efficiency. An additive manufacturing method can produce shaped articles having complicated shapes conventionally not made easily and thus can provide shaped articles suitable to hot work tools such as molds having shapes and characteristics conventionally not exhibited.

In addition, steel for molds is required to have high hardness. In order to enhance hardness, various alloy elements are added. Alloy elements added are in the form of solid solutions in matrices. Such alloy elements in the form of solid solutions in matrices lead to an increase in scattering frequencies of conductive electrons in the matrices, and thus generally serve to decrease heat conductivity. Alloy elements are then demanded to be decreased as much as possible for an increase in heat conductivity, but it is necessary to ensure hardness characteristics demanded for steel for molds.

When a mold is produced by an additive manufacturing method, a mold produced as a shaped article is to be repeatedly used at a high temperature. Therefore, it is necessary to continuously retain required hardness for a mold even in use at a high temperature for a long time, and it is required for an increase in lifetime of a mold to ensure high softening resistance properties, and hardness at a high temperature.

One problem to be solved by the present invention is to provide a shaped article produced from a powder, wherein the shaped article can satisfy both high heat conducting properties and hardness (quenching and tempering hardness, and hardness after retention at a high temperature and softening).

Another problem to be solved by the present invention is to provide a steel powder for a hot work tool, which can be suitably used for producing a hot work tool such as a mold by a shaping method such as an additive manufacturing method of a powder bed system, wherein the steel powder for a hot work tool has a fluidity appropriate for uniformly bedding the powder.

The present inventors have intensively advanced developments, and as a result, have found that a shaped article satisfying predetermined formulae, when produced with a powder satisfying a composition within a prescribed range, can satisfy both high heat conductivity and hardness (quenching and tempering hardness, and hardness after retention at a high temperature and softening) and is suitable for a hot work tool such as a mold.

The first aspect of the present invention is a shaped article produced from an Fe-based alloy powder, the Fe-based alloy powder consisting of, in mass%:

0.20 < C < 0.60;
Si < 0.60;
Mn < 0.90;
Cr < 4.00;
Ni < 2.00;
Mo < 1.20;
W < 2.00;
V < 0.60;
Al < 0.10; and

the balance consisting of Fe and unavoidable impurities, wherein, assuming that:

respective amounts of C, Si, Mn, Cr, Ni, Mo, W, V and Al contained in the shaped article are designated as [C] (mass%), [Si] (mass%), [Mn] (mass%), [Cr] (mass%), [Ni] (mass%), [Mo] (mass%), [W] (mass%), [V] (mass%) and [Al] (mass%);
an average size of carbide contained in the shaped article is designated as PC ($\mu$m);

$$T1 = 71.7 - 5.9\,[Mn] - 6.3\,[Cr] - 2.8\,[V] - 5.7\,[Mo] - 1.1\,[W] - 23.1\,[C] - 5.8\,[Ni] - 1.9\,[Si] - 0.5\,[Al] - 0.6\,PC;$$

and

$$T2 = 80.1 + 2.4\,[Mn] + 1.6\,[Si] + 7.1\,[Cr] - 12.0\,PC,$$

the shaped article satisfies the following formulae (1) to (3):

$$T1 > 32.0 \quad (1)$$

$$T2 > 50.0 \quad (2)$$

$$PC < 3.0 \quad (3).$$

Herein, "PC" representing the average size of carbides contained in the shaped article is an abbreviation based on the initial letters of Precipitated Carbon, and the unit thereof is $\mu$m.

The second aspect of the present invention is the shaped article according to the first aspect, wherein the shaped article is subjected to quenching and tempering treatment and has a heat conductivity of 27.0 W/m/K or more and a hardness of 41.0 HRC or more.

The third aspect of the present invention is the shaped article according to the first or second aspect, wherein the shaped article is subjected to quenching and tempering treatment and has a hardness of 30.0 HRC or more after retention at 600°C for 100 hours.

According to the present invention, an Fe-based alloy powder is provided which can be suitably used as a raw material powder in production of a hot work tool such as a mold by a shaping method such as an additive manufacturing method of a powder bed system. The Fe-based alloy powder of the present invention has an appropriate fluidity, and a shaped article produced from the powder can have a heat conductivity of 27.0 W/m/K or more and a quenching and tempering hardness of 41.0 HRC or more. Accordingly, the Fe-based alloy powder of the present invention can be suitably applied for producing a hot work tool such as a mold having both a high heat conductivity and a high degree of hardness, by additive manufacturing.

A shaped article produced from the Fe-based alloy powder of the present invention not only can have a heat conductivity of 27.0 W/m/K or more and a quenching and tempering hardness of 41.0 HRC or more, but also can have a hardness of 30.0 HRC or more after retention at 600°C for 100 hours. Accordingly, a shaped article which simultaneously has a high heat conductivity, a high degree of hardness and high softening resistance and which is suitable as a hot work tool such as a mold can also be produced from the Fe-based alloy powder of the present invention.

DETAILED DESCRIPTION OF THE INVENTION

<Fe-based alloy powder>

First, the reasons why the compositional range of the Fe-based alloy powder for use in the production of the shaped article of the present invention is prescribed are described.

The Fe-based alloy powder of the present invention is an Fe-based alloy powder consisting of, in mass%:

0.20 < C < 0.60;
Si < 0.60;
Mn < 0.90;
Cr < 4.00;
Ni < 2.00;
Mo < 1.20;
W < 2.00;
V < 0.60;
Al < 0.10; and

the balance consisting of Fe and unavoidable impurities. Herein, "%" with respect to each of the following chemical components means mass%.

C: more than 0.20% and less than 0.60%

C is an element which is formed into a solid solution to thereby reinforce a matrix, and furthermore which forms carbides to promote the precipitation effect. While steel for a mold according to a conventional forging method has the problem of facilitating micro segregation due to an increase in amount of carbon, steel according to additive manufacturing can be rapidly cooled to thereby provide fine carbides and thus can be enhanced in hardness with containing a larger amount of carbon than a forging material. When the amount of C exceeds 0.20%, sufficient quenching and tempering hardness can be obtained. On the other hand, when the amount of C is 0.60% or more, micro segregation is facilitated to result in deterioration in toughness. Furthermore, the amount of C in the form of a solid solution is increased to result in a decrease in heat conductivity of steel. The amount of C is then set to more than 0.20% and less than 0.60%. The amount of C is preferably 0.22% or more, more preferably 0.30% or more, more preferably 0.35% or more. The amount of C may be, for example, 0.40% or more. The amount of C is preferably 0.56% or less. The amount of C may be, for example, 0.50% or less. The above lower limit values may be each combined with any of the above upper limit values. In one preferable embodiment, the amount of C is 0.35% or more and less than 0.60%.

Si: less than 0.60%

Si is an element which is formed into a solid solution in a matrix to result in an enhancement in hardness. In addition, the element has the effect of enhancing softening resistance. However, Si, when the amount thereof is 0.60% or more, forms no carbide and is molten into a matrix, thereby resulting in a significant decrease in heat conductivity. The amount of Si is then set to less than 0.60%. The amount of Si is preferably 0.52% or less, more preferably 0.40% or less, more preferably 0.30% or less. The lower limit value of the amount of Si may be 0%, or may be more than 0%. The amount of Si is preferably 0.02% or more. The amount of Si may be, for example, 0.05% or more, 0.10% or more or 0.15% or more. The above lower limit values may be each combined with any of the above upper limit values.

Mn: less than 0.90%

Mn is an element which enhances quenching ability and which suppresses deterioration in toughness due to bainite formation. In addition, the element has the effect of enhancing softening resistance. However, Mn, when the amount thereof is 0.90% or more, is formed into a solid solution in a matrix to result in a decrease in heat conductivity. The amount of Mn is then set to less than 0.90%. The amount of Mn is preferably 0.86% or less, more preferably 0.80% or less. The amount of Mn may be, for example, 0.75% or less, 0.70% or less, 0.65% or less or 0.60% or less. The lower limit value of the amount of Mn may be 0%, or may be more than 0%. The amount of Mn is preferably 0.04% or more. The amount of Mn may be, for example, 0.10% or more, 0.15% or more, 0.20% or more, 0.25% or more or 0.30% or more. The above lower limit values may be each combined with any of the above upper limit values.

Cr: less than 4.00%

Cr is an element which enhances quenching ability and which suppresses deterioration in toughness due to bainite formation. In addition, the element has the effect of enhancing softening resistance. However, Cr, when the amount thereof is 4.00% or more, is formed into a solid solution in a matrix to result in a decrease in heat conductivity. The amount of Cr is then set to less than 4.00%. The amount of Cr is preferably 3.90% or less, more preferably 3.00% or less, more preferably 2.00% or less. The lower limit value of the amount of Cr is preferably more than 0% from the viewpoint of an enhancement in oxidation resistance. The amount of Cr is preferably 0.05% or more, more preferably 0.10% or more, more preferably 0.20% or more, more preferably 0.30% or more, more preferably 0.40% or more, more preferably 0.50% or more. The above lower limit values may be each combined with any of the above upper limit values.

Ni: less than 2.00%

Ni is an element which enhances quenching ability and which suppresses deterioration in toughness due to bainite formation. However, Ni forms no carbide and is molten into a matrix, thereby resulting in a decrease in heat conductivity. When the amount of Ni is 2.00% or more, heat conductivity is significantly decreased. The amount of Ni is then set to less than 2.00%. The amount of Ni is preferably 1.80% or less, more preferably 1.70% or less, more preferably 1.60% or less, more preferably 1.50% or less. The lower limit value of the amount of Ni may be 0%, or may be more than 0%. The amount of Ni is preferably 0.02% or more. The amount of Ni may be, for example, 0.10% or more, 0.20% or more, 0.30% or more, 0.40% or more, or 0.50% or more. The above lower limit values may be each combined with any of the above upper limit values.

Mo: less than 1.20%

Mo is an element which promotes secondary hardening in tempering to enhance quenching and tempering hardness. Mo less contributes to a decrease in heat conductivity due to addition thereof, and has a large effect of enhancing hardness. However, when the amount of Mo is 1.20% or more, the remaining Mo in a matrix is increased to result in a decrease in heat conductivity. The amount of Mo is then set to less than 1.20%. The amount of Mo is preferably 1.10% or less. The lower limit value of the amount of Mo may be 0%, or may be more than 0%. The amount of Mo is preferably 0.01% or more, more preferably 0.10% or more, more preferably 0.30% or more, more preferably 0.60% or more, more preferably 0.90% or more. The above lower limit values may be each combined with any of the above upper limit values. In one preferable embodiment, the amount of Mo is 0.60% or more and less than 1.20%. In another preferable embodiment, the amount of Mo is 0.90% or more and less than 1.20%.

W: less than 2.00%

W is an element which promotes secondary hardening in tempering to enhance quenching and tempering hardness. However, when the amount of W is 2.00% or more, the remaining W in a matrix is increased to result in a decrease in heat conductivity. The amount of W is then set to less than 2.00%. The amount of W is preferably 1.97% or less. The amount of W may be, for example, 1.90% or less, 1.80% or less, 1.70% or less, 1.60% or less, or 1.50% or less. The lower limit value of the amount of W may be 0%, or may be more than 0%. The amount of W is preferably 0.04% or more. The amount of W may be, for example, 0.10% or more, 0.20% or more, 0.30% or more, 0.40% or more, or 0.50% or more. The above lower limit values may be each combined with any of the above upper limit values.

V: less than 0.60%

V is an element which promotes secondary hardening in tempering to enhance quenching and tempering hardness. However, when the amount of V is 0.60% or more, the remaining V in a matrix is increased to result in a decrease in heat conductivity. The amount of V is then set to less than 0.60%. The amount of V is preferably 0.56% or less, more preferably 0.50% or less, more preferably 0.45% or less. The lower limit value of the amount of V may be 0%, or may be more than 0%. The amount of V is preferably 0.01% or more, more preferably 0.10% or more, more preferably 0.20% or more, more preferably 0.25% or more. The above lower limit values may be each combined with any of the above upper limit values. In one preferable embodiment, the amount of V is 0.25% or more and 0.45% or less.

Al: less than 0.10%

Al is an element which forms nitride to suppress coarsening of a crystal grain during rapid cooling. However, when 0.10% or more of Al is added, excess Al nitride is formed to result in deterioration in toughness. The amount of Al is then set to less than 0.10%. The amount of Al is preferably 0.09% or less. The amount of Al may be, for example, 0.08% or less, or 0.07% or less. The lower limit value of the amount of Al may be 0%, or may be more than 0%. The amount of Al is preferably 0.01% or more. The amount of Al may be, for example, 0.02% or more, or 0.03% or more. The above lower limit values may be each combined with any of the above upper limit values.

<Shaped article>

The shaped article of the present invention is a shaped article produced from the Fe-based alloy powder of the present invention. The powder material for shaping, for use in the production of the shaped article of the present invention, may be configured by only the Fe-based alloy powder of the present invention, or may include any material other than the Fe-based alloy powder of the present invention. The powder material for shaping may include, for example, a powder binder (for example, resin powder).

The shaped article produced from the Fe-based alloy powder of the present invention includes an Fe-based alloy having substantially the same composition as that of the Fe-based alloy powder of the present invention, namely, an Fe-based alloy consisting of, in mass%:

0.20 < C < 0.60;
Si < 0.60;
Mn < 0.90;
Cr < 4.00;
Ni < 2.00;
Mo < 1.20;

W < 2.00;

V < 0.60;

Al < 0.10; and

the balance consisting of Fe and unavoidable impurities.

The shaped article is preferably composed of the Fe-based alloy. The composition of the Fe-based alloy is substantially the same as the composition of the Fe-based alloy powder of the present invention. Accordingly, the descriptions of the respective amounts of C, Si, Mn, Cr, Ni, Mo, W, V and Al contained in the Fe-based alloy powder of the present invention are also applied to the respective amounts of C, Si, Mn, Cr, Ni, Mo, W, V and Al contained in the above Fe-based alloy.

In one embodiment, the method for producing the shaped article of the present invention includes:

Step (1) of preparing for the Fe-based alloy powder of the present invention, and

Step (2) of melting and solidifying the Fe-based alloy powder prepared in step (1), to obtain a shaped article.

The step of melting and solidifying the Fe-based alloy powder preferably includes subjecting the Fe-based alloy powder to a rapid melting process and a rapid cooling process for solidification. Examples of a shaping method including these processes include a three-dimensional additive manufacturing method, a thermal spraying method, a laser coating method, and a cladding method, and in particular, a three-dimensional additive manufacturing method is preferable. The three-dimensional additive manufacturing method can be performed by use of, for example, a 3D printer. The three-dimensional additive manufacturing method is preferably an additive manufacturing method of a powder bed system. Hereinafter, the additive manufacturing method of a powder bed system is described.

A 3D printer is used in the additive manufacturing method of a powder bed system, and the Fe-based alloy powder bedded is irradiated with a laser beam or an electron beam. The irradiation allows for rapid heating and rapid melting of particles. The particles are then rapidly solidified. The melting and solidification allow for bonding of the particles. The irradiation is selectively applied to one portion of the Fe-based alloy powder. A portion of the Fe-based alloy powder, not irradiated, is not molten. A bonding layer is formed on only such a portion irradiated.

An additional Fe-based alloy powder is bedded on the bound layer. Such an Fe-based alloy powder is irradiated with a laser beam or an electron beam. The irradiation allows for rapid melting of particles. The particles are then rapidly solidified. The melting and solidification allow for bonding of particles in such an Fe-based alloy powder, and a new bonding layer is formed. Such a new bonding layer is also bonded with the existing bonding layer.

A procedure involving bedding the Fe-based alloy powder at a thickness of several tens micrometers and performing bonding by irradiation is repeated to thereby gradually grow an assembly of bonding layers. Such growth provides a shaped article having a desired three-dimensional shape. Such an additive manufacturing method easily provides a shaped article having a complicated shape.

Assuming that:

the respective amounts of C, Si, Mn, Cr, Ni, Mo, W, V, and Al contained in the shaped article of the present invention are designated as [C] (mass%), [Si] (mass%), [Mn] (mass%), [Cr] (mass%), [Ni] (mass%), [Mo] (mass%), [W] (mass%), [V] (mass%) and [Al] (mass%);

the average size of carbides contained in the shaped article of the present invention is designated as PC ($\mu$m);

$$T1 = 71.7 - 5.9 [Mn] - 6.3 [Cr] - 2.8 [V] - 5.7 [Mo] - 1.1 [W] - 23.1 [C] - 5.8 [Ni] - 1.9 [Si] - 0.5 [Al] - 0.6 PC;$$

and

$$T2 = 80.1 + 2.4 [Mn] + 1.6 [Si] + 7.1 [Cr] - 12.0 PC,$$

the shaped article of the present invention satisfies formulae (1) to (3):

$$T1 > 32.0 \quad (1)$$

$$T2 > 50.0 \quad (2)$$

$$PC < 3.0 \qquad (3).$$

Hereinafter, formulae (1) to (3) are described.

# Formula (1): T1 > 32.0

T1 is an index of heat conductivity. When the value of T1 is 32.0 or less, the amount of the remaining alloy element in a matrix is increased to result in a decrease in heat conductivity. As the average carbide size PC is larger, path of heat conduction tends to be inhibited, to result in a decrease in heat conductivity. T1 is then set to more than 32.0. T1 may be, for example, 32.2 or more, 33.0 or more, 34.0 or more, 35.0 or more, or 36.0 or more. The upper limit value of T1 is, for example, 55.0. The above upper limit value may be combined with any of the above lower limit values.

# Formula (2): T2 > 50.0

T2 is an index of softening resistance. When the value of T2 is more than 50.0, softening resistance is increased, and hardness after retention at 600°C for 100 hours is enhanced. On the other hand, when the value of T2 is 50.0 or less, the amount of the remaining alloy element in a matrix is increased to result in a decrease in heat conductivity. As the average carbide size PC is smaller, higher energy is required due to carbide growth, and thus much more time is taken for softening, to result in an increase in softening resistance. T2 is then set to more than 50.0. T2 may be, for example, 54.0 or more, 55.0 or more, 56.0 or more, 57.0 or more, 58.0 or more, 59.0 or more, or 60.0 or more. The upper limit value of T2 is, for example, 100. The above upper limit value may be combined with any of the above lower limit values.

# Formula (3): PC < 3.0

PC represents the average size of carbides contained in the shaped article of the present invention, and the unit thereof is $\mu$m. Examples of the carbides include $M_2C$, MC, $M_3C$, $M_7C_3$, and $M_{23}C_6$. Herein, M represents a metal element.

The average size of the carbides is measured as follows by use of a test piece obtained from the shaped article after quenching and tempering. The test piece is observed at a magnification of 1000x with a scanning electron microscope, and carbides present in a region of a total area of 10000 $\mu$m$^2$ arbitrarily selected from a reflected electron image is subjected to image analysis. The equivalent circle diameter of each carbide (the diameter of a circle having an area that is the same as the area of each carbide) is determined, and is defined as the size of each carbide. The total of the sizes of the carbides is divided by the total number of the carbides, and the average size (average equivalent circle diameter) of the carbides is determined. Herein, the lower limit value of the size (equivalent circle diameter) of a carbide to be measured in image analysis is set to 0.20 $\mu$m.

It is important for enhancements in heat conductivity and softening resistance to refine carbides. The average size PC of carbides contained in the shaped article of the present invention is less than 3.0 $\mu$m. PC is preferably 2.8 $\mu$m or less, more preferably 2.5 $\mu$m or less, more preferably 2.0 $\mu$m or less, more preferably 1.5 $\mu$m or less, more preferably 1.0 $\mu$m or less. The lower limit value of PC is, for example, 0.40 $\mu$m. The above lower limit value may be combined with any of the above upper limit values.

Heat conductivity of shaped article after quenching and tempering treatment: 27.0 W/m/K or more

The heat conductivity of the shaped article after quenching and tempering treatment is largely associated with the cooling efficiency in use of the shaped article for a hot work tool such as a mold for hot stamping or die-casting, and thus is a value relating to the production cycle speed. For an enhancement in cooling efficiency, the heat conductivity at an ordinary temperature, of the shaped article after quenching and tempering treatment, is preferably 27.0 W/m/K or more, more preferably 40.0 W/m/K or more. The "ordinary temperature" means 25±5°C, preferably 25°C.

Hardness of shaped article after quenching and tempering treatment (quenching and tempering hardness): 41.0 HRC or more

The hardness (quenching and tempering hardness) of the shaped article after quenching and tempering treatment is a value necessary for allowing the shaped article to obtain a sufficient lifetime in use of the shaped article for a hot work tool such as a mold for hot stamping or die-casting. Thus, the hardness of the shaped article after quenching and tempering treatment is preferably 41.0 HRC or more, more preferably 45.0 HRC or more.

Hardness of shaped article after retention at 600°C for 100 hours: 30.0 HRC or more

Evaluation of the hardness of the shaped article after retention at 600°C for 100 hours can be said to be important for realization of an increase in lifetime of a hot work tool such as a mold for hot stamping or die-casting. This is because the shaped article, when ensures softening resistance properties enabling hardness to be kept at a high temperature, can be said to be hardly lost in hardness even if used as a hot work tool such as a mold for a long time. Thus, the hardness of the shaped article after retention at 600°C for 100 hours is preferably 30.0 HRC or more. Herein, the hardness of the shaped article after retention at 600°C for 100 hours is measured after retention at 600°C for 100 hours of the shaped article after quenching and tempering treatment.

EXAMPLES

(Examples 1 to 25 and Comparative Examples 1 to 13)

Each powder of Examples 1 to 25 and Comparative Examples 1 to 13 was obtained by gas-atomizing a raw material containing chemical components described in Table 1A and Table 1B. Specifically, the raw material was subjected to high-frequency induction heating in vacuum in an alumina crucible, to provide a molten alloy, the molten alloy was then dropped through a nozzle having a diameter of 5 mm, disposed on the bottom of the crucible, an argon gas was sprayed onto the molten metal and the molten metal was refined and rapidly cooled by this spraying, to thereby obtain a large number of fine powders. The powders obtained were sieved so that the diameter of each particle was 63 μm or less, and thus each Fe-based alloy powder of Examples 1 to 25 and Comparative Examples 1 to 13 was obtained.

[Table 1A]

Table 1A

| | | Chemical components (mass%) | | | | | | | | | PC (μm) | T1 | T2 |
|---|---|---|---|---|---|---|---|---|---|---|---|---|---|
| | | C | Si | Mn | Cr | Ni | Mo | W | V | Al | | | |
| | Example 1 | 0.37 | 0.37 | 0.19 | 2.08 | 1.21 | 0.15 | 1.41 | 0.56 | 0.03 | 0.88 | 37.75 | 85.36 |
| | Example 2 | 0.45 | 0.28 | 0.82 | 0.77 | 1.18 | 0.29 | 0.69 | 0.37 | 0.09 | 1.08 | 41.40 | 75.02 |
| | Example 3 | 0.34 | 0.52 | 0.80 | 2.51 | 0.65 | 0.28 | 1.18 | 0.01 | 0.01 | 1.38 | 36.46 | 84.11 |
| | Example 4 | 0.29 | 0.09 | 0.50 | 0.39 | 1.76 | 0.73 | 0.05 | 0.27 | 0.05 | 0.46 | 44.49 | 78.69 |
| | Example 5 | 0.28 | 0.02 | 0.15 | 3.74 | 0.24 | 0.80 | 0.57 | 0.32 | 0.07 | 0.99 | 33.83 | 95.17 |
| | Example 6 | 0.48 | 0.23 | 0.83 | 1.04 | 1.14 | 0.01 | 1.76 | 0.28 | 0.08 | 2.30 | 40.68 | 62.24 |
| | Example 7 | 0.51 | 0.07 | 0.19 | 1.24 | 0.20 | 0.26 | 1.24 | 0.04 | 0.01 | 0.71 | 47.16 | 80.95 |
| | Example 8 | 0.45 | 0.12 | 0.14 | 3.09 | 0.37 | 0.14 | 0.57 | 0.27 | 0.06 | 0.52 | 36.74 | 96.33 |
| | Example 9 | 0.56 | 0.31 | 0.33 | 2.47 | 0.59 | 0.55 | 1.39 | 0.21 | 0.05 | 0.50 | 32.27 | 92.93 |
| | Example 10 | 0.23 | 0.28 | 0.34 | 1.65 | 0.58 | 1.07 | 1.69 | 0.54 | 0.09 | 2.37 | 42.00 | 64.64 |
| | Example 11 | 0.24 | 0.49 | 0.38 | 0.21 | 1.70 | 0.13 | 1.83 | 0.47 | 0.01 | 0.74 | 48.17 | 74.41 |
| | Example 12 | 0.45 | 0.13 | 0.69 | 0.05 | 0.11 | 0.18 | 0.93 | 0.42 | 0.02 | 0.66 | 53.20 | 74.40 |
| | Example 13 | 0.33 | 0.09 | 0.47 | 3.82 | 0.41 | 0.34 | 0.56 | 0.04 | 0.08 | 1.11 | 32.65 | 95.17 |
| | Example 14 | 0.52 | 0.10 | 0.25 | 2.00 | 0.19 | 0.83 | 0.72 | 0.39 | 0.02 | 1.13 | 38.37 | 81.50 |

(continued)

| | Chemical components (mass%) | | | | | | | | | PC (μm) | T1 | T2 |
|---|---|---|---|---|---|---|---|---|---|---|---|---|
| | C | Si | Mn | Cr | Ni | Mo | W | V | Al | | | |
| Example 15 | 0.22 | 0.03 | 0.86 | 2.10 | 0.69 | 0.45 | 0.64 | 0.37 | 0.09 | 2.40 | 41.35 | 68.32 |
| Example 16 | 0.51 | 0.17 | 0.17 | 0.22 | 1.49 | 0.80 | 1.83 | 0.13 | 0.03 | 0.41 | 41.86 | 77.42 |
| Example 17 | 0.37 | 0.07 | 0.19 | 2.72 | 1.33 | 0.01 | 0.49 | 0.42 | 0.05 | 1.41 | 36.10 | 83.06 |
| Example 18 | 0.32 | 0.28 | 0.11 | 0.65 | 0.90 | 0.88 | 1.33 | 0.25 | 0.05 | 0.71 | 47.03 | 76.91 |
| Example 19 | 0.30 | 0.24 | 0.06 | 3.03 | 0.02 | 0.14 | 1.75 | 0.45 | 0.09 | 1.60 | 41.69 | 82.94 |
| Example 20 | 0.25 | 0.26 | 0.34 | 0.83 | 0.23 | 1.05 | 1.63 | 0.05 | 0.04 | 2.70 | 50.54 | 54.83 |
| Example 21 | 0.22 | 0.05 | 0.49 | 1.94 | 0.65 | 0.45 | 0.24 | 0.43 | 0.01 | 1.42 | 44.45 | 78.09 |
| Example 22 | 0.51 | 0.18 | 0.04 | 2.40 | 1.28 | 0.32 | 1.97 | 0.44 | 0.01 | 1.50 | 32.47 | 79.52 |
| Example 23 | 0.56 | 0.33 | 0.07 | 2.62 | 0.65 | 0.57 | 1.28 | 0.24 | 0.08 | 2.13 | 33.36 | 73.84 |
| Example 24 | 0.50 | 0.10 | 0.26 | 1.01 | 0.02 | 1.03 | 0.04 | 0.41 | 0.03 | 2.80 | 46.55 | 54.46 |
| Example 25 | 0.42 | 0.26 | 0.18 | 2.31 | 0.58 | 0.55 | 0.53 | 0.34 | 0.09 | 1.44 | 38.67 | 80.07 |

T1 = 71.7 - 5.9 [Mn] - 6.3 [Cr] - 2.8 [V] - 5.7 [Mo] - 1.1 [W] - 23.1 [C] - 5.8 [Ni] - 1.9 [Si] - 0.5 [Al] - 0.6 PC
T2 = 80.1 + 2.4 [Mn] + 1.6 [Si] + 7.1 [Cr] - 12.0 PC

[Table 1B]

Table 1B

| | Chemical components (mass%) | | | | | | | | | PC (μm) | T1 | T2 |
|---|---|---|---|---|---|---|---|---|---|---|---|---|
| | C | Si | Mn | Cr | Ni | Mo | W | V | Al | | | |
| Comparative Example 1 | 0.19 | 0.43 | 0.86 | 2.62 | 1.42 | 0.65 | 1.95 | 0.28 | 0.04 | 2.80 | 31.70 | 67.85 |
| Comparative Example 2 | 0.62 | 0.36 | 0.89 | 3.29 | 1.25 | 0.77 | 0.53 | 0.27 | 0.01 | 2.45 | 19.20 | 76.77 |
| Comparative Example 3 | 0.42 | 0.62 | 0.71 | 2.10 | 1.38 | 1.02 | 1.83 | 0.31 | 0.06 | 2.99 | 28.47 | 61.83 |
| Comparative Example 4 | 0.58 | 0.20 | 0.93 | 2.72 | 0.13 | 1.19 | 1.51 | 0.02 | 0.01 | 1.18 | 26.75 | 87.80 |
| Comparative Example 5 | 0.40 | 0.41 | 0.73 | 4.04 | 0.06 | 0.45 | 0.45 | 0.07 | 0.04 | 2.07 | 29.54 | 86.35 |
| Comparative Example 6 | 0.46 | 0.41 | 0.43 | 2.02 | 2.05 | 0.45 | 1.79 | 0.14 | 0.02 | 2.90 | 29.95 | 61.33 |
| Comparative Example 7 | 0.35 | 0.54 | 0.20 | 3.86 | 0.26 | 1.25 | 1.02 | 0.33 | 0.02 | 2.97 | 28.18 | 73.21 |
| Comparative Example 8 | 0.58 | 0.24 | 0.67 | 1.88 | 1.32 | 0.74 | 2.09 | 0.21 | 0.08 | 2.32 | 28.64 | 67.60 |
| Comparative Example 9 | 0.50 | 0.45 | 0.83 | 1.10 | 1.84 | 1.00 | 0.06 | 0.62 | 0.04 | 2.00 | 30.47 | 66.62 |

(continued)

| | Chemical components (mass%) | | | | | | | | | PC (μm) | T1 | T2 |
|---|---|---|---|---|---|---|---|---|---|---|---|---|
| | C | Si | Mn | Cr | Ni | Mo | W | V | Al | | | |
| Comparative Example 10 | 0.47 | 0.50 | 0.81 | 1.93 | 1.09 | 1.01 | 0.89 | 0.23 | 0.13 | 1.07 | 29.83 | 83.71 |
| Comparative Example 11 | 0.26 | 0.21 | 0.63 | 2.47 | 0.92 | 0.53 | 0.29 | 0.48 | 0.05 | 5.20 | 39.09 | 37.09 |
| Comparative Example 12 | 0.41 | 0.26 | 0.87 | 3.40 | 0.19 | 0.80 | 0.72 | 0.27 | 0.05 | 1.32 | 28.74 | 90.90 |
| Comparative Example 13 | 0.59 | 0.30 | 0.20 | 0.10 | 0.80 | 0.63 | 1.85 | 0.37 | 0.08 | 2.80 | 46.03 | 48.17 |

T1 = 71.7 - 5.9 [Mn] - 6.3 [Cr] - 2.8 [V] - 5.7 [Mo] - 1.1 [W] - 23.1 [C] - 5.8 [Ni] - 1.9 [Si] - 0.5 [Al] - 0.6 PC
T2 = 80.1 + 2.4 [Mn] + 1.6 [Si] + 7.1 [Cr] - 12.0 PC

[Shaping]

A shaped article having a cuboid of 10 mm × 10 mm × 10 mm was obtained from each of the Fe-based alloy powders of Examples 1 to 25 and Comparative Examples 1 to 13, by use of a three-dimensional additive manufacturing apparatus apparatus (trade name "EOS-M280" manufactured by EOS Japan).

[Heat treatment]

The shaped article obtained was subjected to the following heat treatment (quenching and tempering treatment).

Quenching: retention at 1030°C for 30 minutes, and then oil cooling.
Tempering: repeating of treatment of retention at 600°C for 60 minutes and then air cooling, twice.

[Observation of texture]

A surface perpendicular to the stacking direction of the shaped article after quenching and tempering treatment was polished and thus a test piece for carbide size measurement was obtained. The test piece was observed at a magnification of 1000x with a scanning electron microscope, and carbides present in a region of a total area of 10000 μm$^2$ arbitrarily selected from a reflected electron image was subjected to image analysis. The equivalent circle diameter of each carbide (the diameter of a circle having an area that is the same as the area of each carbide) was determined, and was defined as the size of each carbide. The total of the sizes of the carbides was divided by the total number of the carbides, and the average size (average equivalent circle diameter) of the carbides was determined and was defined as the average size PC of carbides contained in the shaped article. Herein, the lower limit value of the size (equivalent circle diameter) of a carbide to be measured in image analysis was set to 0.20 μm. The measurement results of the value of PC (μm) are shown in Table 1A and Table 1B.

[Measurement of heat conductivity]

The heat conductivity was measured by a laser flush method. The shaped article after quenching and tempering treatment was finished into a disc shape having a diameter of 10 mm and a thickness of 1 mm. The heat conductivity at an ordinary temperature is shown in Table 2A and Table 2B.

[Measurement of hardness]

The hardness (quenching and tempering hardness) of the shaped article after quenching and tempering treatment was determined by using a Rockwell hardness tester and measuring the hardness of a surface perpendicular to a stacking direction of the shaped article after quenching and tempering treatment. The results of the quenching and tempering hardness are shown in Table 2A and Table 2B.

[Measurement of hardness after retention at high temperature]

The shaped article after quenching and tempering treatment was retained at 600°C for 100 hours and then the hardness thereof was measured by the same method as described above. The results are shown in Table 2A and Table 2B.

[Table 2A]

Table 2A

|  | Heat conductivity (W/m/K) | Hardening and tempering hardness (HRC) | Hardness after retention at 600°C for 100 hours (HRC) |
|---|---|---|---|
| Example 1 | 34.20 | 45.64 | 33.69 |
| Example 2 | 38.72 | 47.33 | 32.46 |
| Example 3 | 32.60 | 47.13 | 33.54 |
| Example 4 | 42.56 | 49.46 | 32.89 |
| Example 5 | 29.35 | 48.80 | 34.86 |
| Example 6 | 37.83 | 44.56 | 30.93 |
| Example 7 | 45.85 | 47.56 | 33.16 |
| Example 8 | 32.95 | 50.16 | 35.00 |
| Example 9 | 27.42 | 45.63 | 34.59 |
| Example 10 | 39.46 | 41.61 | 31.22 |
| Example 11 | 47.11 | 44.11 | 32.38 |
| Example 12 | 53.33 | 47.20 | 32.38 |
| Example 13 | 27.89 | 50.65 | 34.86 |
| Example 14 | 34.98 | 46.30 | 33.23 |
| Example 15 | 38.66 | 48.02 | 31.66 |
| Example 16 | 39.29 | 43.46 | 32.74 |
| Example 17 | 32.16 | 49.93 | 33.42 |
| Example 18 | 45.70 | 44.55 | 32.68 |
| Example 19 | 39.08 | 45.44 | 33.40 |
| Example 20 | 50.05 | 42.70 | 30.04 |
| Example 21 | 42.51 | 49.55 | 32.82 |
| Example 22 | 27.67 | 43.65 | 32.99 |
| Example 23 | 28.77 | 44.60 | 32.31 |
| Example 24 | 45.10 | 52.20 | 30.02 |
| Example 25 | 35.35 | 47.57 | 33.06 |

[Table 2B]

Table 2B

| | Heat conductivity (W/m/K) | Hardening and tempering hardness (HRC) | Hardness after retention at 600°C for 100 hours (HRC) |
|---|---|---|---|
| Comparative Example 1 | 26.72 | 42.54 | 31.24 |
| Comparative Example 2 | 11.24 | 45.75 | 32.07 |
| Comparative Example 3 | 22.71 | 40.19 | 30.68 |
| Comparative Example 4 | 20.58 | 43.46 | 33.10 |
| Comparative Example 5 | 24.04 | 48.47 | 32.96 |
| Comparative Example 6 | 24.54 | 42.97 | 30.64 |
| Comparative Example 7 | 22.36 | 42.81 | 31.74 |
| Comparative Example 8 | 22.92 | 41.46 | 31.22 |
| Comparative Example 9 | 25.20 | 45.04 | 31.13 |
| Comparative Example 10 | 24.40 | 44.45 | 32.72 |
| Comparative Example 11 | 35.87 | 46.21 | 28.39 |
| Comparative Example 12 | 23.05 | 46.67 | 33.39 |
| Comparative Example 13 | 44.46 | 40.91 | 29.42 |

As shown in Table 1A and Table 2A, each of the shaped articles produced from the Fe-based alloy powders of Examples 1 to 25, satisfying the composition prescribed in the present invention, satisfied formulae (1), (2) and (3) prescribed in the present invention, had a heat conductivity of 27.0 W/m/K or more, was excellent in cooling efficiency, had a hardness after quenching and tempering, of 41.0 HRC or more, had a hardness of 30.0 HRC or more after retention at 600°C for 100 hours, was excellent in hardness, and was a shaped article suitable for a mold.

On the other hand, as shown in Table 1B and Table 2B, each of the shaped articles produced from the powders of Comparative Examples was inferior in heat conductivity or hardness. For example, Comparative Example 1, in which T1 of formula (1) was low, thus exhibited decreased heat conductivity. Comparative Example 2, in which excess C was present and the amount of unique C was increased, thus exhibited a decreased heat conductivity of steel. Comparative Example 3, in which the amount of Si was excess, thus exhibited a decreased heat conductivity and also inferior hardness as compared with 41 HRC. Comparative Example 4, in which the amount of Mn was excess, thus exhibited deteriorated heat conducting properties. Comparative Example 5, in which the amount of Cr was excess and also the value of T1 of formula (1) was low, thus exhibited a decreased heat conductivity. Comparative Example 6, in which the amount of Ni was excess and also the value of T1 of formula (1) was low, thus exhibited a decreased heat conductivity. Comparative Example 7, in which the amount of Mo was excess, thus exhibited a decreased heat conductivity due to the influence of the remaining Mo in a matrix. Comparative Example 8, in which the amount of W was excess, thus exhibited a decreased heat conductivity due to the influence of the remaining W in a matrix. Comparative Example 9, in which the amount of V was excess, thus exhibited a decreased heat conductivity due to the influence of the remaining V in a matrix. Comparative Example 10, in which the amount of Al was excess and the value of T1 of formula (1) was low, thus exhibited a decreased heat conductivity. Comparative Example 11, in which the value of T2 of formula (2) was low and the size of carbide of formula (3) was large, thus exhibited deteriorated hardness at a high temperature. Comparative Example 12, in which the value of T1 of formula (1) was low, thus exhibited a decreased heat conductivity. Comparative Example 13, in which the value of T2 of formula (2) was low, thus exhibited deteriorated hardness at a high temperature. In addition, quenching and tempering hardness was also not sufficient.

INDUSTRIAL APPLICABILITY

The shaped article of the present invention is suitable as a shaped article for a hot work tool such as a mold for hot stamping or die-casting.

**Claims**

1. A shaped article produced from an Fe-based alloy powder, the Fe-based alloy powder consisting of, in mass%:

   0.20 < C < 0.60;
   Si < 0.60;
   Mn < 0.90;
   Cr < 4.00;
   Ni < 2.00;
   Mo < 1.20;
   W < 2.00;
   V < 0.60;
   Al < 0.10; and
   the balance consisting of Fe and unavoidable impurities,
   wherein, assuming that:

   respective amounts of C, Si, Mn, Cr, Ni, Mo, W, V and Al contained in the shaped article are designated as [C] (mass%), [Si] (mass%), [Mn] (mass%), [Cr] (mass%), [Ni] (mass%), [Mo] (mass%), [W] (mass%), [V] (mass%) and [Al] (mass%);
   an average size of carbide contained in the shaped article is designated as PC ($\mu$m);

$$T1 = 71.7 - 5.9 [Mn] - 6.3 [Cr] - 2.8 [V] - 5.7 [Mo] - 1.1 [W] - 23.1 [C] - 5.8 [Ni] - 1.9 [Si] - 0.5 [Al] - 0.6 PC;$$

   and

$$T2 = 80.1 + 2.4 [Mn] + 1.6 [Si] + 7.1 [Cr] - 12.0 PC,$$

   the shaped article satisfies the following formulae (1) to (3):

$$T1 > 32.0 \quad (1)$$

$$T2 > 50.0 \quad (2)$$

$$PC < 3.0 \quad (3).$$

2. The shaped article according to claim 1, wherein the shaped article is subjected to quenching and tempering treatment and has a heat conductivity of 27.0 W/m/K or more and a hardness of 41.0 HRC or more.

3. The shaped article according to claim 1 or 2, wherein the shaped article is subjected to quenching and tempering treatment and has a hardness of 30.0 HRC or more after retention at 600°C for 100 hours.

## INTERNATIONAL SEARCH REPORT

| International application No. |
|---|
| **PCT/JP2021/045248** |

**A. CLASSIFICATION OF SUBJECT MATTER**

*C22C 33/02*(2006.01)i; *C22C 38/00*(2006.01)i; *C22C 38/46*(2006.01)i; *B33Y 80/00*(2015.01)i; *B33Y 70/00*(2020.01)i; *B22F 1/00*(2022.01)i; *B22F 10/38*(2021.01)i; *B22F 10/64*(2021.01)i

FI: C22C38/00 304; C22C33/02 A; B33Y70/00; B22F1/00 U; B22F10/64; B22F10/38; C22C38/00 301H; C22C38/46; B33Y80/00

According to International Patent Classification (IPC) or to both national classification and IPC

**B. FIELDS SEARCHED**

Minimum documentation searched (classification system followed by classification symbols)

C22C33/02; C22C38/00-38/60; B22F1/00-8/00; B22F10/00-10/85

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-145407 A (DAIDO STEEL CO., LTD.) 12 August 2016 (2016-08-12) paragraphs [0052], [0054]-[0057], tables 1, 2, comparative steel 4 | 1-3 |
| A | JP 2020-70457 A (SANYO SPECIAL STEEL CO., LTD.) 07 May 2020 (2020-05-07) table 1, no. 17 | 1-3 |
| A | JP 2019-85633 A (SANYO SPECIAL STEEL CO., LTD.) 06 June 2019 (2019-06-06) claims, tables 1-6 | 1-3 |
| A | WO 2019/220917 A1 (HITACHI METALS LTD.) 21 November 2019 (2019-11-21) entire text | 1-3 |
| A | JP 2015-178649 A (RIKEN CORP.) 08 October 2015 (2015-10-08) entire text | 1-3 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **14 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2021/045248**

| Patent document cited in search report | | | Publication date (day/month/year) | Patent family member(s) | | | Publication date (day/month/year) |
|---|---|---|---|---|---|---|---|
| JP | 2016-145407 | A | 12 August 2016 | US<br>paragraphs [0087]-[0096],<br>tables 1, 2, comparative steel 4<br>EP<br>CA<br>CN | 2016/0215375<br><br><br>3050649<br>2918775<br>105821327 | A1<br><br><br>A1<br>A1<br>A | |
| JP | 2020-70457 | A | 07 May 2020 | (Family: none) | | | |
| JP | 2019-85633 | A | 06 June 2019 | (Family: none) | | | |
| WO | 2019/220917 | A1 | 21 November 2019 | US<br>entire text<br>EP<br>CN | 2021/0040591<br><br>3795707<br>111954725 | A1<br><br>A1<br>A | |
| JP | 2015-178649 | A | 08 October 2015 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008081840 A
- JP 2018119177 A

- JP 2015224363 A